# EUROPÄISCHE PATENTSCHRIFT

(11) **EP 2 838 685 B1**
(45) Veröffentlichungstag und Bekanntmachung des Hinweises auf die Patenterteilung: **16.08.2017**
(21) Anmeldenummer: 13724150.1
(22) Anmeldetag: 10.04.2013
(51) Int. Cl.: B23D 61/18

(54) **UNRUNDER VERDRILLTER SÄGEDRAHT SOWIE VERFAHREN UND VORRICHTUNG ZUR HERSTELLUNG DESSELBEN**
NON-ROUND TWISTED SAW WIRE, AND METHOD AND DEVICE FOR PRODUCING SAME
FIL À SCIER TORSADÉ DE SECTION NON CIRCULAIRE AINSI QUE SON PROCÉDÉ ET DISPOSITIF DE FABRICATION

(30) Priorität: 16.04.2012 AT 501352012
(43) Veröffentlichungstag der Anmeldung: 25.02.2015
(73) Patentinhaber: Steinklauber Industriebeteiligung & Vermögensverwaltung GmbH, 8055 Graz (AT)
(72) Erfinder: ORSO, Anton, A-8010 Graz (AT)
(74) Vertreter: Wirnsberger, Gernot
(86) Internationale Anmeldenummer: PCT/AT2013/050086
(87) Internationale Veröffentlichungsnummer: WO 2013/155544

(56) Entgegenhaltungen:
- DE-A1- 1 938 105
- JP-A- H0 457 666
- JP-A- H1 110 514
- JP-A- 2007 044 841

## Beschreibung

Die Erfindung betrifft einen Sägedraht, der um eine Längsachse verdrillt ist und einen unrunden Querschnitts aufweist, gemäß dem Oberbegriff des Anspruchs 1. Ein solcher Sägedraht ist aus JP 2007 044 841 A bekannt. Darüber hinaus betrifft die Erfindung ein Verfahren zur Herstellung eines verdrillten Sägedrahtes, wobei auf einen etwa kreisförmigen Sägedraht bei einem Durchziehen durch einen Ziehstein eine Querschnittsänderung aufgebracht wird und der Sägedraht anschließend verdrillt wird. Ein solches Verfahren ist aus JP 2007 044 841 A bekannt.

Weiter betrifft die Erfindung eine Vorrichtung zur Herstellung eines verdrillten Sägedrahtes, gemäß dem Oberbegriff des Anspruch 12. Ein solche Vorrichtung ist aus JP 2007 044 841 A bekannt. Verdrillte Sägedrähte mit unrundem Querschnitt sind bereits aus dem Stand der Technik bekannt geworden. So sind beispielsweise verdrillte Sägedrähte, die im Querschnitt ein Polygon oder eine Ellipse aufweisen, bekannt. Weiter ist es bekannt, einen Sägedraht mit Diamantpulver zu beschichten, um beispielsweise Wafer bestehend aus einem Halbleitermaterial zu schneiden. Derartige Sägedrähte haben den Nachteil, dass eine Schnittkante in einem zu schneidenden Bauteil insbesondere bei hohen Geschwindigkeiten nicht glatt ausgebildet ist, weswegen hohe Mengen an Verschnittmaterial anfallen. Gerade bei dünnen Wafern muss jedoch ein Verschnitt gering gehalten werden, um Kosten zu minimieren.

Aufgabe der Erfindung ist es daher, einen Sägedraht der eingangs genannten Art anzugeben, mit dem ein Schneiden von Wafern mit hoher Geschwindigkeit und geringem Verschnitt möglich ist.

Eine weitere Aufgabe der Erfindung ist es, ein Verfahren der eingangs genannten Art anzugeben, mit dem ein derartiger Sägedraht herstellbar ist.

Des Weiteren soll eine Vorrichtung angegeben werden, mit der ein derartiges Verfahren umsetzbar ist.

Die erste Aufgabe wird durch die Merkmale des Anspruchs 1 gelöst. Die Erfinder haben erkannt, dass mit einem derart ausgebildeten Sägedraht mineralische Werkstoffe mit hoher Genauigkeit und geringem Verschnitt geschnitten werden können. Ein derartiger Sägedraht ist insbesondere zur Herstellung von Scheiben bzw. Wafern eines Halbleitermaterials wie Silicium, die von einem zylinderförmigen Ingot geschnitten werden, besonders gut einsetzbar. Da bei hoher Schnittgeschwindigkeit eine Außenkontur des Sägedrahtes in Richtung einer Längsachse rund ist, wird ein Ausreißen von Schnitträndern vermieden. Der Querschnitt ist dabei jene Fläche des Sägedrahtes, die bei einem Schnitt senkrecht zur Längsachse des Sägedrahtes freigelegt wird. Eine Kante ergibt sich aus einer Berührung des mindestens einen Kreisbogens mit dem mindestens einen abgeflachten Bereich. Ein Kühl- und Schmiermittel kann besonders gut vom unrunden Sägedraht transportiert werden, wodurch hohe Schnittgeschwindigkeiten möglich sind. Als Kühl- und Schmiermittel wird bevorzugt eine Suspension in Wasser verwendet. Dadurch ist ein Schneiden mit hohem Vorschub möglich, wodurch Kosten in einer Waferfertigung reduziert werden.

Vorteilhaft ist es, wenn mindestens zwei Kreisbögen vorgesehen sind und die Kreisbögen einen gemeinsamen Mittelpunkt aufweisen. Dadurch ergibt sich eine besonders glatte Schnittkontur bei hohen möglichen Schnittgeschwindigkeiten. Dabei ist zweckmäßigerweise der gemeinsame Mittelpunkt ein Mittelpunkt des Sägedrahtes, sodass der Sägedraht einen kreisförmigen Querschnitt mit mindestens zwei abgeflachten Bereichen aufweist.

Bevorzugt sind zwei bis fünf voneinander beabstandete Kreisbögen vorgesehen, die über gerade Bereiche verbunden sind. Weil über die Kreisbögen eine stabile Führung des Sägedrahtes während eines Schnitts erzielt wird, ergibt sich mit einem derart ausgebildetem Sägedraht eine stabile Führung bei mehreren Kanten, wodurch eine Standzeit erhöht wird.

Zweckmäßigerweise sind drei Kreisbögen vorgesehen, wobei die Kreisbögen einen Mittelpunktswinkel von 60° bis 80°, insbesondere von 65° bis 75°, aufweisen. Damit ist eine besonders gute Führung des Sägedrahtes bei hohen Standzeiten möglich.

Bevorzugt weist der Querschnitt einen minimalen Durchmesser und einen maximalen Durchmesser auf, wobei der minimale Durchmesser des Sägedrahtes zwischen 70 % und 99,5 %, insbesondere zwischen 85 % und 99 %, des maximalen Durchmessers beträgt. Der maximale Durchmesser entspricht dabei einem Durchmesser eines gedachten Umkreises des Querschnitts, während der minimale Durchmesser einen Durchmesser eines gedachten Kreises beschreibt, der in den unrunden Querschnitt eingeschrieben werden kann. Dieser Kreis kann auch als Inkreis bezeichnet werden. Ein derartig ausgebildeter Querschnitt ermöglicht eine hohe übertragbare Zugkraft im Sägedraht, wodurch über eine Spannung während des Sägens eine hohe Genauigkeit eines Schnitts erzielt wird.

Es kann bevorzugt vorgesehen sein, dass eine Querschnittsfläche des Sägedrahtes mehr als 80 %, bevorzugt mehr als 85 %, insbesondere mehr als 90 %, einer Fläche eines gedachten Kreises mit einem Durchmesser entsprechend einem maximalen Durchmesser des Querschnitts entspricht. Dadurch wird eine besonders hohe maximale Zugkraft erzielt, wodurch eine Qualität des Schnitts verbessert wird.

Es ist von Vorteil, wenn eine Schlaglänge von 5 mm bis 2000 mm, bevorzugt von 10 mm bis 1000 mm, insbesondere von 20 mm bis 500 mm, besonders bevorzugt von 50 mm bis 120 mm, beträgt. Der Schlag, auch Drall, Dralllänge oder Drallschritt genannt, bezeichnet dabei jene Länge der Verdrillung, nach der eine Verdrehung um die Längsachse um 360° abgeschlossen ist. Verdrillen bezeichnet erfindungsgemäß ein Verdrehen bzw. Tordieren des Sägedrahtes um eine Längsachse, sodass in den Sägedraht eine Torsion eingebracht wird. Bevorzugt wird der Sägedraht derart verdrillt, dass eine reine Torsion um die Längsachse vorliegt, wodurch ein Stück des Sägedrahtes mit einer Länge entsprechend dem Schlag in Richtung der Längsachse eine kreisförmige Außenkontur mit einem Durchmesser entsprechend dem maximalen Durchmesser aufweist. Dies ermöglicht besonders glatte Schnittkanten in einem zu schneidenden Material.

Zweckmäßig ist es, wenn ein maximaler Durchmesser des Sägedrahtes zwischen 0,01 mm und 1 mm, bevorzugt zwischen 0,05 mm und 0,5 mm, insbesondere zwischen 0,08 mm und 0,25 mm, beträgt. Dadurch wird ein Verschnitt beim Schneiden minimiert. Insbesondere bei einer Herstellung von Wafern werden so Herstellkosten reduziert.

Es hat sich bewährt, dass der Sägedraht aus einem Stahl besteht, wobei der Stahl einen Kohlenstoffanteil von 0,3 % bis 1,4 %, insbesondere von 0,7 % bis 1,2 %, bevorzugt etwa 0,85 %, aufweist. Dadurch können hohe Standzeiten des Sägedrahtes bei hoher Qualität des Schnitts erzielt werden.

Bevorzugt besteht der Sägedraht aus einem Material, das eine Festigkeit zwischen 1000 N/mm² und 5000 N/mm², bevorzugt zwischen 2500 N/mm² und 4500 N/mm², insbesondere etwa 3500 N/mm², aufweist. Dadurch können hohe Schnittkräfte bei gleichzeitig hoher Genauigkeit der Schnittkante im zu schneidenden Material erzielt werden.

Mit Vorteil ist eine Oberfläche des Sägedrahtes beschichtet, insbesondere mit Messing beschichtet. Dies ermöglicht eine günstige Ausbildung des Schnitts bei gleichzeitig hoher Standzeit des Sägedrahtes. Gleichzeitig wird eine gute Haftung eines Kühl- bzw. Schmiermittels bzw. einer Suspension ermöglicht. Alternativ kann die Oberfläche auch mit einem anderen Material als Messing galvanisiert werden, um die vorstehend beschriebenen Wirkungen zumindest teilweise zu erzielen.

Bevorzugt ist der Sägedraht einteilig ausgebildet. Im Gegensatz zu Sägedrähten des Standes der Technik, die häufig als verdrillte Einzeldrähte ausgebildet sind, kann so ein Aufwand in der Fertigung reduziert und gleichzeitig die Standzeit erhöht werden.

Zweckmäßigerweise ist der Sägedraht im Querschnitt etwa symmetrisch ausgebildet. Damit wird eine gleichmäßige mechanische Beanspruchung des Sägedrahtes erreicht, wodurch auch eine besonders gleichmäßige Führung und hohe Standzeit erreicht werden.

Mit Vorteil weist der Sägedraht keine Diamantschnittmittel auf und ist insbesondere nicht mit Diamantpulver beschichtet. Wegen der erfindungsgemäßen Gestaltung des Querschnitts des Sägedrahtes wird ein hochgenauer Schnitt erzielt, ohne dass Diamantpulver zur Verstärkung der Schneidwirkung eingesetzt werden muss. Wird Diamantpulver auf einem Sägedraht abgeschieden, ergibt sich nämlich gerade keine scharf begrenzte bzw. runde Außenkontur des Sägedrahtes, wodurch es zu unsauberen Schnittkanten und einem erhöhten Verschnitt bei einer Fertigung kommt. Ein erfindungsgemäßer Sägedraht weist hingegen eine scharf begrenzte, bevorzugt kreisrunde, Außenkontur in Richtung der Längsachse auf, weswegen hochpräzise Schnitte möglich sind.

Vorteilhaft ist es, wenn eine Oberfläche des Sägedrahtes eine Haftung einer Suspension ermöglicht. Wird eine Suspension zum Schneiden verwendet, kann ein Vorschub erhöht und die Standzeit verlängert werden. Bevorzugt wird eine Suspension in Wasser verwendet, die fachmännisch auch als "Slurry" bezeichnet wird. Über eine Unrundheit des Querschnitts sowie ein Galvanisieren der Oberfläche des Sägedrahtes bzw. ein Beschichten mit Messing wird dies besonders günstig erreicht.

Um die vorstehend angeführten Wirkungen zu erzielen, ist es zweckmäßig, wenn bei einer handelsüblichen Säge mit einem Sägedraht, der Sägedraht erfindungsgemäß ausgebildet ist. Dadurch können eine höhere Schnittgeschwindigkeit sowie ein höherer Vorschub und eine bessere Qualität eines geschnittenen Bauteils erzielt werden als dies bei Verwendung von Sägedrähten des Standes der Technik möglich ist. Dies kann insbesondere bei der Fertigung von Wafern eines kristallinen Werkstoffs wie Silicium positive Effekte auf Fertigungskosten haben.

Die weitere Aufgabe wird durch die Merkmale des Anspruchs 8 gelöst. Bevorzugt wird dazu der Ziehstein derart ausgebildet, dass der Sägedraht im Zuge der einer Umformung an zumindest einer Position abgeflacht wird. Dies kann beispielsweise über einen freien Querschnitt im Ziehstein erfolgen, der in zumindest einer Richtung eine freie Länge aufweist, die kleiner ist als ein Durchmesser des kreisrunden Sägedrahtes vor der Querschnittsänderung. Dadurch wird der Sägedraht während der Querschnittsänderung radial gepresst, wodurch eine festigkeitssteigernde Umformung stattfindet. Für eine gute Führung des Sägedrahtes während der Umformung ist es vorteilhaft, wenn der Ziehstein dazu an einer Seite, an welcher der unverformte Sägedraht in den Ziehstein eingeführt wird, einen etwa runden Querschnitt aufweist und an einer zweiten Seite, von welcher der Sägedraht durch den Ziehstein gezogen wird, einen Querschnitt mit zumindest einer Abflachung aufweist. Eine anschließende Verdrillung kann mit bekannten Verfahren des Standes der Technik durchgeführt werden, um einen Sägedraht mit in Umfangsrichtung umlaufenden Kanten, welche aus einem Übergang der Kreisbögen in die abgeflachten Bereiche gebildet werden, zu erhalten.

Es hat sich bewährt, dass der Sägedraht mit einem minimalen Durchmesser ausgebildet wird, der zwischen 70 % und 99,5 %, insbesondere zwischen 85 % und 99 %, eines maximalen Durchmessers beträgt. Dadurch wird eine hohe maximale Zugkraft im Sägedraht erzielt, wodurch hohe Schnittkräfte und hohe Schnittgeschwindigkeiten erreicht werden.

Um das Verfahren besonders effizient umzusetzen, hat es sich bewährt, dass der Sägedraht mit einer Ausziehscheibe durch den Ziehstein gezogen wird.

Zweckmäßigerweise ist ein Falschdraller vorgesehen, mit welchem eine Verdrillung in den Sägedraht eingebracht wird, wobei die Verdrillung mit einer Geschwindigkeit von 1 m/s bis 30 m/s, bevorzugt von 10 m/s bis 20 m/s, eingebracht wird. Falschdraller haben sich bewährt, um die Verdrillung mit hoher Geschwindigkeit und Genauigkeit in den Sägedraht einzubringen. Dies ermöglicht eine Herstellung von hohen Mengen in kurzer Zeit, wodurch Kosten reduziert werden.

Vorteilhaft ist es, wenn eine Schlaglänge der Verdrillung von 5 mm bis 2000 mm, bevorzugt von 10 mm bis 1000 mm, insbesondere von 20 mm bis 500 mm, besonders bevorzugt von 50 mm bis 120 mm, in den Sägedraht eingebracht wird. Besonders wenn der Sägedraht einen kreisförmigen Querschnitt mit mehreren Abflachungen aufweist, ergibt sich so eine durchgängig gut schneidende kreisförmige Außenkontur des Sägedrahtes in Richtung einer Längsachse.

Mit Vorteil werden nach einem Verdrillen Querspannungen des Sägedrahtes in einem Streckbock oder einem Richtrollensatz zumindest reduziert. Durch ein Reduzieren der Querspannungen wird die Standzeit des Sägedrahtes erhöht, da mechanische Spannungen reduziert werden.

Bevorzugt wird der Sägedraht nach einer Reduktion der Querspannungen an eine Spulvorrichtung übergeben und mit dieser aufgewickelt. Dadurch kann ein hoher Automatisierungsgrad erzielt werden.

Zweckmäßigerweise wird eine Oberfläche des Sägedrahtes beschichtet, insbesondere mit Messing beschichtet, um einen Verschleiß zu minimieren, die Standzeit zu erhöhen und ein Kühl- und/oder Schmiermittel an der Oberfläche des Sägedrahtes zu transportieren.

Mit Vorteil wird ein Sägedraht verwendet, der aus einem Stahl besteht, wobei der Stahl einen Kohlenstoffanteil zwischen 0,3 % und 1,4 %, insbesondere zwischen 0,7 % und 1,2 %, bevorzugt etwa 0,85 %, aufweist. Derartige Stähle haben sich als günstig für eine Verwendung als Sägedraht erwiesen.

Bevorzugt wird ein Sägedraht aus einem Material verwendet, das eine Festigkeit zwischen 1000 N/mm² und 5000 N/mm², bevorzugt zwischen 2500 N/mm² und 4500 N/mm², insbesondere etwa 3500 N/mm², aufweist. Um hohe Schnittgeschwindigkeiten insbesondere bei Wafern aus einem Halbleitermaterial wie Silicium zu erzielen, ist eine hohe Zugkraft im Sägedraht vorteilhaft, weshalb sich Materialien mit derartigen Festigkeiten als besonders günstig erwiesen haben. Üblicherweise wird während der Umformung im Ziehstein die Festigkeit des Materials erhöht, weswegen dieses Verfahren besonders günstig zur Herstellung von Sägedrähten für hohe Schnittgeschwindigkeiten bei Wafern geeignet ist.

Die weitere Aufgabe wird durch die Merkmale des Anspruchs 12 gelöst. Mit einer derartigen Vorrichtung kann ein erfindungsgemäßer Sägedraht besonders effizient hergestellt werden.

Bevorzugt kann es auch sein, dass ein minimaler Durchmesser des unrunden Querschnitts zwischen 70 % und 99,5 %, insbesondere zwischen 85 % und 99 %, eines maximalen Durchmessers beträgt. Wird der Ziehstein derart ausgebildet, weist der Sägedraht eine hohe maximale Zugkraft in Richtung der Längsachse auf.

Zweckmäßigerweise ist eine Ausziehscheibe zum Ziehen des Drahtes durch den Ziehstein vorgesehen. Dadurch kann das Verfahren mit hoher Geschwindigkeit und gut steuerbar realisiert werden.

Mit Vorteil ist ein Falschdraller zum Einbringen der Verdrillung in den Sägedraht vorgesehen. Falschdraller haben sich als vorteilhaft erwiesen, um eine Verdrillung bzw. eine plastische Verdrehung in einen Sägedraht einzubringen.

Um Querspannungen zu reduzieren, ist bevorzugt ein Streckbock oder ein Richtrollensatz vorgesehen. Dies erhöht die Standzeit des Sägedrahtes, da mechanische Spannungen reduziert werden. Die Genauigkeit der Schnittkante in einem geschnittenen Bauteil wird ebenfalls erhöht, da der Sägedraht besonders gerade ausgerichtet werden kann.

Zweckmäßigerweise ist ein Ziehsteinhalter mit einer integrierten Schmiermittelzufuhr vorgesehen, wobei der Ziehstein im Ziehsteinhalter befestigbar ist. Dadurch kann der Ziehstein einfach getauscht werden, um einen Sägedraht einer anderen Dimension zu fertigen. Um einen Abrieb des Sägedrahtes am Ziehstein zu minimieren, ist es zweckmäßig, Schmiermittel während des Umformens zuzuführen.

Weitere Merkmale, Vorteile und Wirkungen der Erfindung ergeben sich anhand der nachfolgend dargestellten Ausführungsbeispiele. In den Zeichnungen, auf welche dabei Bezug genommen wird, zeigen:
- Fig. 1: einen Querschnitt eines erfindungsgemäßen Sägedrahtes;
- Fig. 2: ein Stück eines erfindungsgemäßen Sägedrahtes;
- Fig. 3: eine Vorrichtung zur Herstellung eines erfindungsgemäßen Sägedrahtes;
- Fig. 4: eine weitere Vorrichtung zur Herstellung eines erfindungsgemäßen Sägedrahtes.

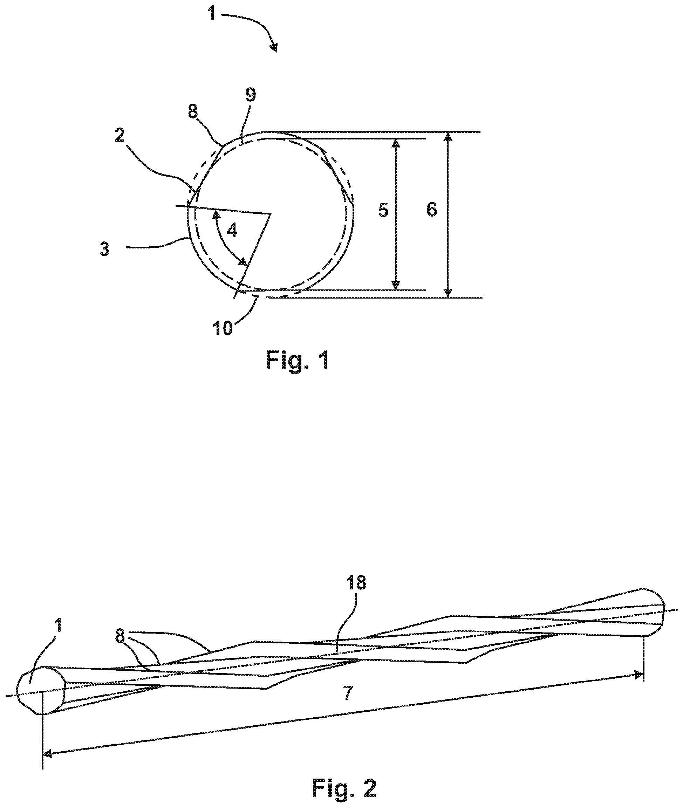

Fig. 1 zeigt einen Querschnitt 1 eines erfindungsgemäßen Sägedrahtes, wobei drei abgeflachte Bereiche 2 sowie drei Kreisbögen 3 ersichtlich sind. An den Punkten, an welchen die abgeflachten Bereiche 2 die Kreisbögen 3 berühren, ergeben sich Kanten 8. Besonders vorteilhaft lässt sich mit einem derartigen Sägedraht ein Wafer eines Halbleitermaterials, insbesondere ein Siliciumwafer, schneiden. Es hat sich bewährt, die abgeflachten Bereiche 2 derart auszubilden, dass ein minimaler Durchmesser 5 mehr als 70 %, bevorzugt zwischen 85 % und 99 %, eines maximalen Durchmessers 6 beträgt. Dadurch kann die Querschnittsfläche, mit der Kräfte in Richtung einer Längsachse 18 übertragen werden, möglichst groß gehalten werden. Der minimale Durchmesser 5 entspricht dabei einem Durchmesser eines Inkreises 9 des Querschnitts 1; der maximale Durchmesser 6 entspricht dem Durchmesser eines Umkreises 10 des Querschnitts 1. Die Querschnittsfläche beträgt dabei bevorzugt mehr als 80 %, im ausgeführten Beispiel mehr als 90 %, einer Fläche eines gedachten Kreises mit einem Durchmesser entsprechend dem maximalen Durchmesser 6. Um eine möglichst gute Führung des Sägedrahtes während eines Schnitts zu erreichen, hat es sich bewährt, die Kreisbögen 3 derart auszubilden, dass diese einen Mittelpunktswinkel 4 zwischen 60° und 80°, bevorzugt etwa 75°, aufweisen, wie im Ausführungsbeispiel abgebildet. Über eine Verdrillung des Sägedrahtes um die Längsachse 18 sind die Kanten 8 über einen Umfang des Sägedrahtes verteilt, wodurch ein gleichmäßiger Schnitt erzielt wird.

Fig. 2 zeigt einen erfindungsgemäßen Sägedraht in isometrischer Ansicht. Ersichtlich ist die Verdrillung des Sägedrahtes um die Längsachse 18, wobei eine Länge des Sägedrahtes mit einer Länge entsprechend einer Schlaglänge 7 abgebildet ist. Die Schlaglänge 7 ist jene Länge, nach der eine Verdrehung des Sägedrahtes um 360° um die Längsachse 18 abgeschlossen ist. Eine besonders hohe Festigkeit des Sägedrahtes wird insbesondere durch eine einteilige Ausbildung erreicht, wobei eine Unrundheit über eine plastische Verformung eines etwa kreisförmigen Drahtes erzielt wird. Im Gegensatz zu Sägedrähten, welche die Unrundheit durch ein Verdrillen mehrerer Einzeldrähte erzielen, können mit einer einteiligen Ausbildung höhere Kräfte in Richtung der Längsachse 18 übertragen werden. Dies ermöglicht hohe Schnittkräfte, die wiederum zu einer hohen Schnittgeschwindigkeit führen. Gleichzeitig wird eine hohe Genauigkeit des Schnitts erreicht, die zu einem geringen Verschnitt des Materials, welches geschnitten wird, führt. Insbesondere bei Siliciumwafern bringt dies hohe Kosteneinsparungen in einer Fertigung. Der Sägedraht gemäß dem Ausführungsbeispiel besteht aus einem Stahl mit etwa 0,85 % Kohlenstoff, welcher nach der Umformung, die im Zuge der Fertigung vorgenommen wird, eine Festigkeit von etwa 3500 N/mm² aufweist. Mit Vorteil weist der Stahl eine Festigkeit von mehr als 1000 N/mm², insbesondere mehr als 2500 N/mm², auf, um hohe mögliche Schnittkräfte zu erreichen. Der maximale Durchmesser 6 des Sägedrahtes beträgt bevorzugt von 0,08 mm bis 0,25 mm, wobei der abgebildete Sägedraht einen maximalen Durchmesser 6 von 0,12 mm aufweist. Bewährt hat sich eine Schlaglänge 7 des Sägedrahtes von 20 mm bis 500 mm, insbesondere von 50 mm bis 120 mm, wobei der abgebildete Sägedraht eine Schlaglänge 7 von 80 mm aufweist. Vorteilhaft ist es, eine Oberfläche des Sägedrahtes galvanisch zu beschichten, besonders bevorzugt wird die Oberfläche vermessingt. Über eine unrunde Ausbildung des Querschnitts 1, die Verdrillung sowie die Beschaffenheit der Oberfläche ist ein Benetzen der Oberfläche des Sägedrahtes mit einer Suspension besonders günstig möglich. Insbesondere im Bereich der abgeflachten Bereiche 2 kann die Suspension besonders gut aufgenommen und transportiert werden. Eine Suspension kann während des Schnitts Kühl- und Schmierwirkung entfalten, wodurch eine Standzeit des Sägedrahtes erhöht und eine Genauigkeit des Schnitts verbessert werden kann. Ersichtlich sind weiter die entsprechend der Verdrillung umlaufenden Kanten 8. Bewährt hat sich eine symmetrische Ausbildung des Sägedrahtes, wie abgebildet, um einen Verschleiß zu minimieren und eine Standzeit zu optimieren. Vorteilhafterweise werden mehr als zwei, insbesondere drei, abgeflachte Bereiche 2 in einen kreisförmigen Rohdraht 11 eingebracht, um eine gute Führung des Sägedrahtes bei gleichzeitig hoher Schnittleistung zu erzielen. Selbstverständlich können auch mehr als drei abgeflachte Bereiche 2 vorgesehen sein, die bevorzugt immer den Inkreis 9 des Querschnitts 1 tangieren. Im Ausführungsbeispiel wird der Inkreis 9 von den abgeflachten Bereichen 2 etwa mittig tangiert, wodurch Kanten 8 mit gleicher Geometrie gebildet werden.

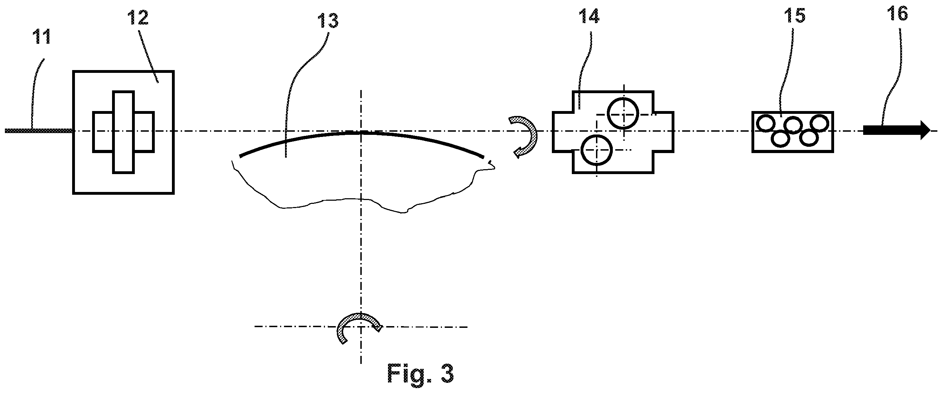

Fig. 3 zeigt eine erfindungsgemäße Vorrichtung zur Herstellung eines Sägedrahtes in schematischer Darstellung. Ersichtlich ist ein Ziehstein 12, der in einem Ziehsteinhalter mit integrierter Schmiermittelzufuhr befestigt ist, sowie eine Ausziehscheibe 13 zum Ziehen eines Drahtes durch den Ziehstein 12. Weiter ist ein Falschdraller 14 vorgesehen, mit dem die Verdrillung in den Sägedraht eingebracht wird, der nach einer Umformung im Ziehstein 12 einen unrunden Querschnitt 1 aufweist. Um Querspannungen zu reduzieren, ist weiter ein Richtrollensatz 15 vorgesehen. Zu einer Herstellung des erfindungsgemäßen Sägedrahtes mit einer Vorrichtung gemäß Fig. 3 wird von einer Seite ein Rohdraht 11, der einen etwa kreisrunden Querschnitt 1 aufweist, in den Ziehstein 12 eingeführt. Der Rohdraht 11 wird mittels einer Ausziehscheibe 13 durch den Ziehstein 12 gezogen, wobei im Ziehstein 12 eine Querschnittsänderung auf den Rohdraht 11 aufgebracht wird, sodass dieser nach der Querschnittsänderung einen unrunden Querschnitt 1 aufweist. Der unrunde Querschnitt 1 weist Kreisbögen 3 und abgeflachte Bereiche 2 auf, wobei Kanten 8 an Kontaktkanten zwischen den Kreisbögen 3 und den abgeflachten Bereichen 2 gebildet werden. Die abgeflachten Bereiche 2 sind bevorzugt als gerade Bereiche bzw. Kreissehnen ausgebildet, wie in Fig. 1 dargestellt. Nach Umformung des Sägedrahtes im Ziehstein 12 wird die Verdrillung im Falschdraller 14 in den Sägedraht eingebracht. Dabei sind Geschwindigkeiten von etwa 15 m/s üblich, sodass eine hohe Effizienz erreicht wird. Dem Falschdraller 14 nachgeordnet ist der Richtrollensatz 15 vorgesehen, in welchem Querspannungen des Sägedrahtes reduziert werden, um eine Standzeit des Sägedrahtes zu erhöhen. Nach Reduktion der Querspannungen wird der Sägedraht an eine Übergabe 16 übergeben, von welcher der Sägedraht an eine Spulvorrichtung weitertransportiert wird. In der Spulvorrichtung wird der Sägedraht automatisiert auf Spulen gewickelt, um so eine hohe Effizienz der Vorrichtung und des Verfahrens zu ermöglichen.

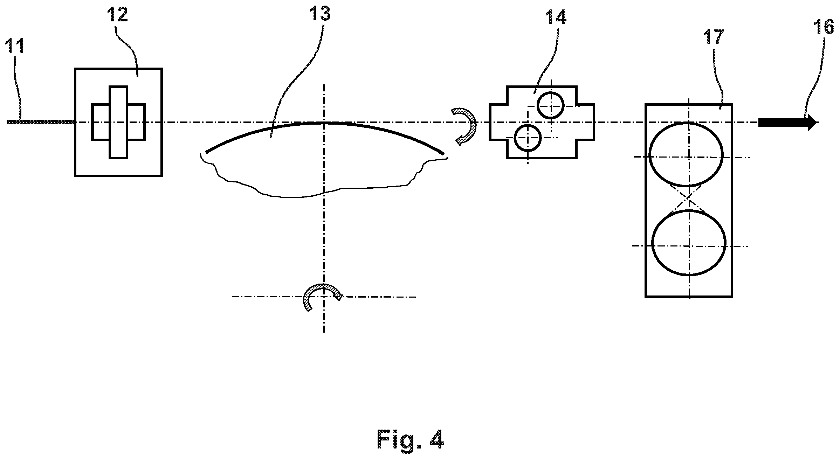

Fig. 4 zeigt eine weitere erfindungsgemäße Vorrichtung zur Herstellung eines erfindungsgemäßen Sägedrahtes, die analog zur Vorrichtung gemäß Fig. 3 mit einem Ziehstein 12, einer Ausziehscheibe 13 sowie einem Falschdraller 14 ausgeführt ist. Im Unterschied zur Vorrichtung gemäß Fig. 3 ist jedoch vorgesehen, dass Querspannungen im Sägedraht mit einem Streckbock 17 reduziert werden. Der Streckbock 7 ist eine Vorrichtung, in welcher Querspannungen mittels Strecken des Sägedrahtes reduziert werden. Dem Streckbock 17 nachgeordnet ist wie bei einer Vorrichtung gemäß Fig. 3 eine Übergabe 16 vorgesehen, in welcher der Sägedraht an eine Spulvorrichtung übergeben wird.

Mit einem erfindungsgemäßen Sägedraht können Scheiben bzw. Wafer aus mineralischen Werkstoffen, insbesondere Siliciumwafer, mit hoher Genauigkeit und Geschwindigkeit bei gleichzeitig geringem Verschnitt geschnitten werden. Gegenüber Sägedrähten des Standes der Technik ist ein erheblich gesteigerter Vorschub möglich. Weil keine Diamanten auf dem Sägedraht angeordnet sind und der verdrillte Sägedraht an einem Umfang Kreisbögen 3 aufweist, ergibt sich eine Außenkontur des Sägedrahtes in Richtung der Längsachse 18, welche kreisförmig mit einem Durchmesser entsprechend dem maximalen Durchmesser 6 ist. Über diese kreisförmige Außenkontur bzw. die Kreisbögen 3 wird der Sägedraht besonders gut geführt, weswegen sich eine glatte Kante des Schnitts im Bauteil mit geringem Verschnitt ergibt.

## Patentansprüche

1. Gezogener Sägedraht zur Herstellung von Wafern, welcher Sägedraht um eine Längsachse (18) verdrillt ist und einen unrunden Querschnitt (1) aufweist, wobei der Querschnitt (1) an einem Umfang mindestens einen Kreisbogen (3) und mindestens einen abgeflachten Bereich (2) aufweist, **dadurch gekennzeichnet, dass** der unrunde Querschnitt (1) in den Sägedraht durch Ziehen des Sägedrahtes durch einen Ziehstein (12) eingebracht ist, welcher Ziehstein (12) derart ausgebildet ist, dass ein Sägedraht mit einem etwa kreisrunden Querschnitt nach einem Durchziehen durch den Ziehstein (12) einen unrunden Querschnitt (1) aufweist.

2. Sägedraht nach Anspruch 1, **dadurch gekennzeichnet, dass** eine Schlaglänge (7) von 5 mm bis 2000 mm, bevorzugt von 10 mm bis 1000 mm, insbesondere von 20 mm bis 500 mm, besonders bevorzugt von 50 mm bis 120 mm, beträgt.

3. Sägedraht nach Anspruch 1 oder 2, **dadurch gekennzeichnet, dass** ein maximaler Durchmesser (6) des Sägedrahtes zwischen 0,01 mm und 1 mm, bevorzugt zwischen 0,05 mm und 0,5 mm, insbesondere zwischen 0,08 mm und 0,25 mm, beträgt.

4. Sägedraht nach einem der Ansprüche 1 bis 3, **dadurch gekennzeichnet, dass** der Sägedraht aus einem Stahl besteht, wobei der Stahl einen Kohlenstoffanteil von 0,3 % bis 1,4 %, insbesondere von 0,7 % bis 1,2 %, bevorzugt etwa 0,85 %, aufweist.

5. Sägedraht nach einem der Ansprüche 1 bis 4, **dadurch gekennzeichnet, dass** eine Oberfläche des Sägedrahtes beschichtet, insbesondere mit Messing beschichtet, ist.

6. Sägedraht nach einem der Ansprüche 1 bis 5, **dadurch gekennzeichnet, dass** der Sägedraht keine Diamantschnittmittel aufweist und insbesondere nicht mit Diamantpulver beschichtet ist.

7. Säge mit einem Sägedraht, **dadurch gekennzeichnet, dass** der Sägedraht nach einem der Ansprüche 1 bis 6 ausgebildet ist.

8. Verfahren zur Herstellung eines verdrillten Sägedrahtes, insbesondere eines Sägedrahtes nach einem der Ansprüche 1 bis 6, wobei auf einen etwa kreisförmigen Sägedraht bei einem Durchziehen durch einen Ziehstein (12) eine Querschnittsänderung aufgebracht wird, sodass der Sägedraht nach dem Durchziehen einen unrunden Querschnitt (1) aufweist, und der Sägedraht anschließend verdrillt wird, wobei der Sägedraht mit einem unrunden Querschnitt (1), der an einem Umfang zumindest einen Kreisbogen (3) und mindestens einen abgeflachten Bereich (2) aufweist, ausgebildet wird.

9. Verfahren nach Anspruch 8, **dadurch gekennzeichnet, dass** der Sägedraht mit einer Ausziehscheibe (13) durch den Ziehstein (12) gezogen wird.

10. Verfahren nach Anspruch 8 oder 9, **dadurch gekennzeichnet, dass** ein Falschdraller (14) vorgesehen ist, mit welchem eine Verdrillung in den Sägedraht eingebracht wird, wobei die Verdrillung mit einer Geschwindigkeit von 1 m/s bis 30 m/s, bevorzugt von 10 m/s bis 20 m/s, eingebracht wird.

11. Verfahren nach einem der Ansprüche 8 bis 10, **dadurch gekennzeichnet, dass** eine Oberfläche des Sägedrahtes beschichtet, insbesondere mit Messing beschichtet, wird.

12. Vorrichtung zur Herstellung eines verdrillten Sägedrahtes, wobei ein Ziehstein (12), in welchem eine Querschnittsänderung in einen Sägedraht mit einem etwa kreisrunden Querschnitt (1) mittels Durchziehen einbringbar ist, und eine Einrichtung zum Verdrillen des Sägedrahtes vorgesehen sind, **dadurch gekennzeichnet, dass** der Ziehstein (12) derart ausgebildet ist, dass der Sägedraht nach dem Durchziehen einen unrunden Querschnitt (1) aufweist, wobei der unrunde Querschnitt (1) an einem Umfang zumindest einen Kreisbogen (3) und mindestens einen abgeflachten Bereich (2) aufweist.

13. Vorrichtung nach Anspruch 12, **dadurch gekennzeichnet, dass** ein Falschdraller (14) zum Einbringen der Verdrillung in den Sägedraht vorgesehen ist.

14. Vorrichtung nach Anspruch 12 oder 13, **dadurch gekennzeichnet, dass** ein Streckbock (17) oder ein Richtrollensatz (15) vorgesehen ist, um Querspannungen zu reduzieren.

15. Vorrichtung nach einem der Ansprüche 12 bis 14, **dadurch gekennzeichnet, dass** ein Ziehsteinhalter mit einer integrierten Schmiermittelzufuhr vorgesehen ist, wobei der Ziehstein (12) im Ziehsteinhalter befestigbar ist.

## Claims

1. A drawn saw wire for manufacturing wafers, the saw wire being twisted around a longitudinal axis (18) and having a non-round cross section (1), wherein the cross section (1) has at least one circular arc (3) and at least one flattened area (2) on one periphery, **characterized in that** the non-round cross section (1) is introduced into the saw wire by pulling the saw wire through a draw plate (12), with the draw plate (12) being designed in such a way that a saw wire with a roughly circular cross section has a non-round cross section (1) after pulled through the draw plate (12).

2. The saw wire according to claim 1, **characterized in that** a lay length (7) measures from 5 mm to 2000 mm, preferably from 10 to 1000 mm, in particular from 20 mm to 500 mm, especially preferably from 50 mm to 120 mm.

3. The saw wire according to claim 1 or 2, **characterized in that** a maximal diameter (6) of the saw wire measures between 0.01 mm and 1 mm, preferably between 0.05 mm and 0.5 mm, in particular between 0.08 mm and 0.25 mm.

4. The saw wire according to one of claims 1 to 3, **characterized in that** the saw wire consists of a steel, wherein the steel has a carbon percentage of 0.3% to 1.4%, in particular of 0.7% to 1.2%, preferably of about 0.85%.

5. The saw wire according to one of claims 1 to 4, **characterized in that** a surface of the saw wire is coated, in particular with brass.

6. The saw wire according to one of claims 1 to 5, **characterized in that** the saw wire has no diamond cutting means, and in particular is not coated with diamond powder.

7. A saw with a saw wire, **characterized in that** the saw wire is designed according to one of claims 1 to 6.

8. A method for manufacturing a twisted saw wire, in particular a saw wire according to one of claims 1 to 6, wherein a cross sectional change is made on a roughly circular saw wire while being pulled through a draw plate (12), so that the saw wire has a non-round cross section (1) after pulled through, and the saw wire is subsequently twisted, wherein the saw wire with a non-round cross section (1) is formed, and has at least one circular arc (3) and at least one flattened area (2) on one periphery.

9. The method according to claim 8, **characterized in that** the saw wire is pulled through the draw plate (12) with a pull-out disk (13).

10. The method according to claim 8 or 9, **characterized in that** a false twister (14) is provided, which is used to introduce a twist into the saw wire, wherein twisting takes place at a rate of 1 m/s to 30 m/s, preferably of 10 m/s to 20 m/s.

11. The method according to one of claim 8 to 10, **characterized in that** a surface of the saw wire is coated, in particular coated with brass.

12. A device for manufacturing a twisted saw wire, wherein a draw plate (12), into which a cross sectional change can be made in a saw wire with a roughly circular cross section (1) by pulling it through, and a device for twisting the saw wire are provided, **characterized in that** the draw plate (12) is designed in such a way that the saw wire has a non-round cross section (1) after pulled through, wherein the non-round cross section (1) has at least one circular arc (3) and at least one flattened area (2) on one periphery.

13. The device according to claim 12, **characterized in that** a false twister (14) is provided for introducing the twist into the saw wire.

14. The device according to claim 12 or 13, **characterized in that** a stretcher block (17) or straightening roller set (15) is provided to reduce transverse tensions.

15. The device according to one of claims 12 to 14, **characterized in that** a draw plate holder with an integrated lubricant feed is provided, wherein the draw plate (120 can be fastened in the draw plate holder.

## Revendications

1. Fil de sciage étiré pour la fabrication de plaquettes ou tranches (de silicium), lequel fil de sciage est torsadé autour d'un axe longitudinal (18) et comporte une section, la section (1) comportant sur une périphérie au moins un arc de cercle (3) et au moins une zone aplatie (2), **caractérisé en ce que** la section ovalisée (1) est introduite dans le fil de sciage par étirage du fil de sciage à travers une filière (12), laquelle filière (12) est constituée de telle manière qu'un fil de sciage avec une section à peu près circulaire présente une section ovalisée (1) après tréfilage à travers la filière (12).

2. Fil de sciage selon la revendication 1, **caractérisé en ce qu'**une longueur de choc (7) est de 5 mm à 2000 mm, de préférence de 10 mm à 1000 mm, notamment de 20 mm à 500 mm, de façon particulièrement préférée de 50 mm à 120 mm.

3. Fil de sciage selon la revendication 1 ou 2, **caractérisé en ce qu'**un diamètre maximal (6) du fil de sciage se situe entre 0,01 mm et 1 mm, de préférence entre 0,05 mm et 0,5 mm, notamment entre 0,08 mm et 0,25 mm.

4. Fil de sciage selon l'une quelconque des revendications 1 à 3, **caractérisé en ce que** le fil de sciage est en acier, l'acier comportant une teneur en carbone de 0,3% à 1,4%, notamment de 0,7% à 1,2%, de préférence à peu près 0,85%.

5. Fil de sciage selon l'une quelconque des revendications 1 à 4, **caractérisé en ce qu'**une surface du fil de sciage est revêtue, notamment revêtue de laiton.

6. Fil de sciage selon l'une quelconque des revendications 1 à 5, **caractérisé en ce que** le fil de sciage ne comporte aucun moyen de coupe au diamant et n'est notamment pas revêtu de poudre de diamant.

7. Scie avec un fil de sciage, **caractérisée en ce que** le fil de sciage est constitué selon l'une quelconque des revendications 1 à 6.

8. Procédé de fabrication d'un fil de sciage torsadé, notamment d'un fil de sciage selon l'une quelconque des revendications 1 à 6, une modification de section étant appliquée sur un fil de sciage à peu près circulaire lors d'un tréfilage à travers une filière (12) de telle manière que le fil de sciage présente une section ovalisée (1) après le tréfilage et le fil de sciage est ensuite torsadé, le fil de sciage étant constitué avec une section ovalisée (1) qui présente sur une périphérie au moins un arc de cercle (3) et au moins une zone aplatie (2).

9. Procédé selon la revendication 8, **caractérisé en ce que** le fil de sciage est étiré à travers la filière (12) avec un disque d'étirage (13).

10. Procédé selon la revendication 8 ou 9, **caractérisé en ce qu'**un dispositif de fausse torsion (14) est prévu avec lequel une torsion est pratiquée dans le fil de sciage, la torsion étant pratiquée à une vitesse de 1 m/s à 30 m/s, de préférence de 10 m/s à 20 m/s.

11. Procédé selon l'une quelconque des revendications 8 à 10, **caractérisé en ce qu'**une surface du fil de sciage est revêtue, notamment revêtue de laiton.

12. Dispositif de fabrication d'un fil de sciage torsadé, une filière (12), dans laquelle une modification de section dans un fil de sciage avec une section circulaire (1) peut être pratiquée par tréfilage, et un dispositif de torsion du fil de sciage étant prévus, **caractérisé en ce que** la filière (12) est constituée de telle manière que le fil de sciage présente une section ovalisée (1) après le tréfilage, la section ovalisée (1) présentant sur une périphérie au moins un arc de cercle (3) et au moins une zone aplatie (2).

13. Dispositif selon la revendication 12, **caractérisé en ce qu'**un dispositif de fausse torsion (14) est prévu pour pratiquer la torsion dans le fil de sciage.

14. Dispositif selon la revendication 12 ou 13, **caractérisé en ce qu'**un support d'étirage (17) ou un ensemble de rouleaux à dresser (15) est prévu pour réduire les contraintes transversales.

15. Dispositif selon l'une quelconque des revendications 12 à 14, **caractérisé en ce qu'**un support de filière avec une alimentation en lubrifiant intégrée est prévu, la filière (12) pouvant être fixée dans le support de filière.
